(19) Europäisches Patentamt
European Patent Office
Office européen des brevets

(11) **EP 4 580 279 A1**

(12) **EUROPEAN PATENT APPLICATION**
published in accordance with Art. 153(4) EPC

(43) Date of publication:
**02.07.2025 Bulletin 2025/27**

(21) Application number: **22960286.7**

(22) Date of filing: **30.09.2022**

(51) International Patent Classification (IPC):
**H04W 72/04** (2023.01)      **H04W 76/14** (2018.01)

(52) Cooperative Patent Classification (CPC):
**H04W 72/04; H04W 76/14**

(86) International application number:
**PCT/CN2022/123231**

(87) International publication number:
**WO 2024/065664 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZHANG, Shichang
Dongguan, Guangdong 523860 (CN)**
• **MA, Teng
Dongguan, Guangdong 523860 (CN)**

(74) Representative: **Novagraaf Technologies
Bâtiment O2
2, rue Sarah Bernhardt
CS90017
FR-92665 Asnières-sur-Seine Cedex (FR)**

(54) **SIDELINK COMMUNICATION METHOD AND APPARATUS, AND DEVICE, STORAGE MEDIUM AND PROGRAM PRODUCT**

(57)     A sidelink communication method and apparatus, and a device, a storage medium and a program product, which relate to the technical field of communications. The method comprises: a second terminal device receiving first information sent by a first terminal device, wherein the first information is used for indicating a set of resources that are suitable for use by the second terminal device, and/or a set of resources that are not suitable for use by the second terminal device; and the second terminal device selecting a sending resource for an SL PRS according to the first information. According to a set of resources that are suitable for use by a second terminal device, and/or a set of resources that are not suitable for use by the second terminal device, as indicated by first information sent by a first terminal device, the second terminal device selects a sending resource for an SL PRS from among the set of resources that are suitable for use by the second terminal device, and/or from among the remaining resources that are obtained by excluding the set of resources that are not suitable for use by the second terminal device. Therefore, the quality of an SL PRS resource selected by the second terminal device is improved, and the precision of sidelink positioning is thus improved.

FIG. 8

## Description

## TECHNICAL FIELD

Embodiments of the present disclosure relate to the technical field of communications, and in particular, relate to a method and apparatus for sidelink (SL) communication, and a device, a storage medium and a program product thereof.

## RELATED ART

In SL communication, a terminal device may select a transmission resource from a resource pool by means of monitoring.

In related arts, a method for SL communication is provided, in which the terminal device may select, by means of monitoring, a resource for transmitting an SL positioning reference signal (PRS) from the resource pool. However, how the terminal device selects the resource for transmitting the SL PRS requires further research.

## SUMMARY

Embodiments of the present disclosure provide a method and apparatus for SL communication, and a device, a storage medium and a program product. The technical solutions are as follows.

According to some embodiments of the present disclosure, a method for SL communication is provided. The SL communication method is applicable to a second terminal device, and includes:

> receiving first information from a first terminal device, wherein the first information is used for indicating a set of resources suitable for use by the second terminal device, and/or a set of resources unsuitable for use by the second terminal device; and
> selecting a transmission resource for an SL PRS based on the first information.

According to some embodiments of the present disclosure, a method for SL communication is provided. The SL communication method is applicable to a first terminal device, and includes:

transmitting first information to a second terminal device, wherein the first information is used for indicating a set of resources suitable for use by the second terminal device, and/or a set of resources unsuitable for use by the second terminal device.

According to some embodiments of the present disclosure, an apparatus for SL communication is provided. The apparatus includes:

> a receiving module, configured to receive first information from a first terminal device, wherein the first information is used for indicating a set of resources suitable for use by a second terminal device, and/or a set of resources unsuitable for use by the second terminal device; and
a processing module, configured to select a transmission resource for an SL PRS based on the first information.

According to some embodiments of the present disclosure, an apparatus for SL communication is provided. The apparatus includes:
a transmitting module, configured to transmit first information to a second terminal device, wherein the first information is used for indicating a set of resources suitable for use by the second terminal device, and/or a set of resources unsuitable for use by the second terminal device.

According to some embodiments of the present disclosure, a terminal device is provided. The terminal device includes a processor and a memory. The memory is configured to store one or more computer programs. The processor is configured to load and run the one or more computer programs, to cause the terminal device to perform the resource exclusion method described above.

According to some embodiments of the present disclosure, a computer-readable storage medium is provided. The storage medium stores one or more computer programs, wherein the one or more computer programs, when loaded and run by a processor, cause the processor to perform the method for SL communication described above.

According to some embodiments of the present disclosure, a chip is provided. The chip includes a programmable logic circuit and/or one or more program instructions, wherein the chip, when running, is caused to perform the method for SL communication described above.

According to some embodiments of the present disclosure, a computer program product is provided. The computer program product includes one or more computer programs stored in a computer-readable storage medium. The one or more computer programs, when read from the computer-readable storage medium and run by a processor, cause the processor to perform the method for SL communication described above.

The technical solutions according to the embodiments of the present disclosure achieve the following beneficial effects:
Based on the set of resources suitable for use by the second terminal device and/or the set of resources unsuitable for use by the second terminal device that are/is indicated by the first information from the first terminal device, the second terminal device selects the transmission resource for the SL PRS from the set of resources suitable for use by the second terminal device and/or a remaining resource excluding the set of resources unsuitable for use by the second terminal device. In this way, quality of the SL PRS resource selected by the second terminal device is improved, such that accuracy of SL positioning is improved.

BRIEF DESCRIPTION OF DRAWINGS

FIG. 1 is a schematic diagram of a network architecture according to some embodiments of the present disclosure;

FIG. 2 is a schematic diagram of SL communication within a coverage area of a network according to some embodiments of the present disclosure;

FIG. 3 is a schematic diagram of SL communication partially within network coverage according to some embodiments of the present disclosure;

FIG. 4 is a schematic diagram of SL communication beyond network coverage according to some embodiments of the present disclosure;

FIG. 5 is a schematic diagram of a second resource selection mode according to some embodiments of the present disclosure;

FIG. 6 is a schematic diagram of a hidden node according to some embodiments of the present disclosure;

FIG. 7 is a schematic diagram of an exposed node according to some embodiments of the present disclosure;

FIG. 8 is a flowchart of a method for SL communication according to some embodiments of the present disclosure;

FIG. 9 is a schematic diagram of a method for SL communication according to some embodiments of the present disclosure;

FIG. 10 is schematic diagram of a method for SL communication according to some embodiments of the present disclosure;

FIG. 11 is a schematic diagram of a resource selection window according to some embodiments of the present disclosure;

FIG. 12 is a schematic diagram of a method for SL communication according to some embodiments of the present disclosure;

FIG. 13 is schematic diagram of an association relationship between a dedicated resource pool and an SL communication resource pool according to some embodiments of the present disclosure;

FIG. 14 is a block diagram of an apparatus for SL communication according to some embodiments of the present disclosure;

FIG. 15 is a block diagram of an apparatus for SL communication according to some embodiments of the present disclosure;

FIG. 16 is a block diagram of an apparatus for SL communication according to some embodiments of the present disclosure;

FIG. 17 is a block diagram of an apparatus for SL communication according to some embodiments of the present disclosure; and

FIG. 18 is a schematic structural diagram of a terminal device according to some embodiments of the present disclosure.

DETAILED DESCRIPTION

For clearer descriptions of the objectives, technical solutions, and advantages of the present disclosure, embodiments of the present disclosure are further described in detail hereinafter with reference to the accompanying drawings.

A network architecture and a service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with evolution of the network architecture and emergence of a new service scenario, the technical solutions according to the embodiments of the present disclosure are also applicable to a similar technical problem.

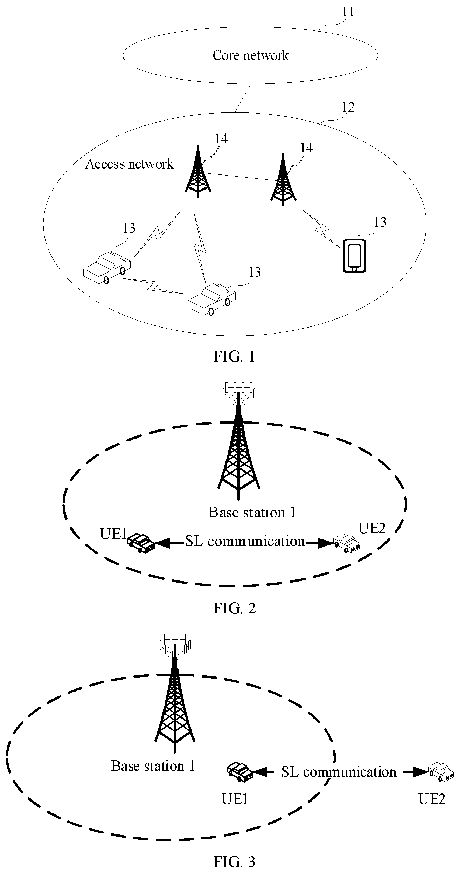

FIG. 1 is a schematic diagram of a network architecture according to some embodiments of the present disclosure. The network architecture may include a core network 11, an access network 12, and a terminal device 13.

The core network 11 includes a plurality of core network devices. Each of the core network devices mainly functions to provide user connection, user management, and service bearing, and provide an interface to an external network as a bearer network. For example, in a 5$^{th}$ generation (5G) new radio (NR) system, the core network may include an access and mobility management function (AMF) entity, a user plane function (UPF) entity, a session management function (SMF) entity, and other devices.

The access network 12 includes a plurality of access network devices 14. In the 5G NR system, the access network may be referred to as a new generation-radio access network (NG-RAN). The access network device 14 is a device deployed in the access network 12 to provide a wireless communication function for the terminal device 13. The access network device 14 may refer to various forms of macro base stations, micro base stations, relay stations, access points, and the like. The name of devices with a function of the access network device may vary in systems employing different radio access technologies. For example, the device is referred to as a gNodeB or a gNB in the 5G NR system. The term "access network device" may be referred to by different names with the evolution of communication technologies. For convenience of description, in the embodiments of the present disclosure, the above devices providing the wireless communication function for the terminal device 13 are collectively referred to as the access network device. In addition, in the embodiments of the present disclosure, unless otherwise specified, the mentioned network device is the access network device such as a base station.

A plurality of terminal devices 13 are usually deployed, and one or more terminal devices 13 may be distributed in a cell managed by each of the access network devices 14. The terminal device 13 may include various handheld devices, vehicle-mounted devices, wearable devices, computing devices, or other processing devices connected to a wireless modem that have the wireless communication function, and various forms of user devices, mobile stations (MSs), and the like. For convenience of description, the devices described above are collectively referred to as the terminal device. The access network device 14 communicates with the core network device using a specific air technology, such as an NG interface in the 5G NR system. The access network device 14 communicates with the terminal device 13 using a specific air technology, such as a Uu interface. In addition, in the embodiments of the present disclosure, both the terminal device and user equipment (UE) are usually used interchangeably, but they express a same meaning.

The terminal devices 13 (such as the vehicle-mounted device and another device like another vehicle-mounted device, a mobile phone, or a road side unit (RSU)) may communicate with each other over a direct communication interface (such as a PC5 interface). Correspondingly, a communication link established based on the direct communication interface may be referred to as a direct link or an SL. SL transmission means that communication data transmission is carried out directly between terminal devices over the SL, which is different from a traditional cellular system in which communication data is received or transmitted over the access network device. The SL transmission has characteristics of a short delay and a small overhead, and is suitable for communication between two terminal devices that are geographically close to each other (such as a vehicle-mounted device and another peripheral device geographically close to the vehicle-mounted device). It should be noted that in FIG. 1, only vehicle to vehicle (V2V) communication in a vehicle-to-everything (V2X) scenario is taken as an example, and an SL technology is appliable to a scenario in which terminal devices communicate directly with each other. In other words, the terminal device in the present disclosure is any device that conducts communication using the SL technology.

The "5G NR system" in the embodiments of the present disclosure may also be referred to as a 5G system or an NR system, but those skilled in the art may understand its meaning. The technical solutions according to the embodiments of the present disclosure may be applicable to the 5G NR system, and may also be applicable to evolved systems of the 5G NR system.

Before the technical solutions of the present disclosure are described, some background technical knowledge involved in the present disclosure is described. The following related technologies, as optional solutions, may be arbitrarily combined with the technical solutions according to the embodiments of the present disclosure, and all fall within the protection scope of the embodiments of the present disclosure. The embodiments of the present disclosure include at least part of the following content.

1. SL communication in different network coverage environments

Based on network coverage of a terminal device engaged in the communication, the SL communication may be categorized into SL communication within the network coverage, SL communication partially within the network coverage, and SL communication beyond the network coverage.

In the SL communication within the network coverage, all terminal devices engaged in the SL communication are within a coverage area of the same access network device (base station). Therefore, these terminal devices may conduct the SL communication based on the same SL configuration by receiving configuration signaling of the access network device (base station). For example, as shown in FIG. 2, both a UE 1 and a UE 2 are within a network coverage area of a base station 1.

In the SL communication partially within the network coverage, some terminal devices engaged in the SL communication are within a coverage area of an access network device (base station). These terminal devices are capable of receiving configuration signaling of the access network device (base station), and conducting the SL communication based on a configuration of the access network device (base station). A terminal device beyond the network coverage area is incapable of receiving the configuration signaling of the access network device (base station). In this case, the terminal device beyond the network coverage area determines an SL configuration based on pre-configuration information and information carried over a physical sidelink broadcast channel (PSBCH) transmitted by the terminal device within the network coverage area, and conducts the SL communication. For example, as shown in FIG. 3, the UE 1 is within the network coverage area of a base station 1, while the UE 2 is beyond the network coverage area of the base station 1.

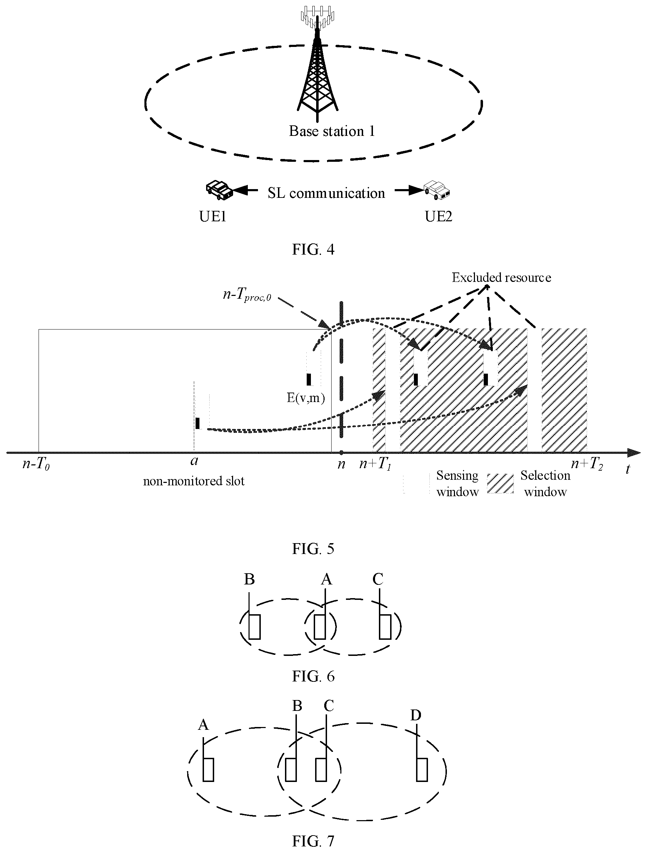

In the SL communication beyond the network coverage, all terminal devices engaged in the SL communication are beyond a network coverage area. Therefore, all the terminal devices determine an SL configuration based on pre-configuration information and conduct the SL communication. For example, as shown in FIG. 4, both the UE 1 and the UE 2 are beyond a network coverage area of the base station 1.

2. Resource selection mode in device-to-device (D2D)/ V2X communication

The D2D communication is a D2D-based SL transmission technology, which is different from a method in which communication data is received or transmitted by a base station in a traditional cellular system. Therefore, the D2D communication has a higher spectral efficiency and a lower transmission delay. An Internet of vehicles system adopts direct communication between terminal devices. Two transmission modes are defined in the 3$^{rd}$ Generation Partnership Project (3GPP): a first mode and a second mode.

In the first mode, a transmission resource of the terminal device is allocated by the base station, and the terminal device transmits data on an SL over the resource allocated by the base station. The base station may allocate a resource for single-transmission to the terminal device or allocate a resource for semi-static transmission to the terminal device. As shown in FIG. 2, the terminal device is within the network coverage area, and the network allocates a transmission resource for SL transmission to the terminal device.

In the second mode, the terminal device autonomously selects a resource from a resource pool and transmits data over the resource. As shown in FIG. 4, the terminal device is beyond a coverage area of a cell, and autonomously selects the transmission resource from a pre-configured resource pool and conducts the SL transmission over the transmission resource. Alternatively, as shown in FIG. 2, the terminal device autonomously selects the transmission resource from a resource pool configured by the network and conducts the SL transmission over the transmission resource.

Resource selection in the second mode is performed by the following two steps.

In step 1, the terminal device takes all available resources within a resource selection window as a set of resources A.

In the case that the terminal device transmits the data in some slots within a sensing window and does not perform monitoring, all resources in slots corresponding to the slots within the selection window are excluded. The terminal device uses a set of values for a "resource reservation period" field in a configuration of the resource pool in use to determine a corresponding slot within the selection window.

In the case that the terminal device monitors a physical sidelink control channel (PSCCH) within the sensing window, reference signal received power (RSRP) of the PSCCH or RSRP of a physical sidelink shared channel (PSSCH) scheduled by the PSCCH is measured. In the case that the measured RSRP is greater than a sidelink reference signal received power (SL-RSRP) threshold and it is determined, based on resource reservation information in sidelink control information (SCI) transmitted in the PSCCH, that a reserved resource is within the resource selection window, the corresponding resource is excluded from the set of resources A. In the case that remaining resources in the set of resources A are insufficient to account for X% of all the resources before the resource exclusion, the SL-RSRP threshold is increased by 3 dB, and step 1 is performed again. Possible values for X are {20, 35, 50}, and the terminal device determines the parameter X from the set of values based on a priority of to-be-transmitted data. In addition, the SL-RSRP threshold is related to a priority carried in the PSCCH monitored by the terminal device and the priority of the to-be-transmitted data of the terminal device. The terminal device takes the remaining resources after the resource exclusion in the set of resources A as a candidate set of resources.

In step 2, the terminal device randomly selects a plurality of resources from the candidate set of resources as transmission resources in initial transmission and retransmission.

3. Second resource selection mode in NR V2X communication

As shown in FIG. 5, a terminal device triggers resource selection or reselection in a slot n, and a resource selection window starts from n+T1 and ends at n+T2, wherein $0 <= T1 <= T_{proc,1}$. In the case that a subcarrier spacing is 15 kHz, 30 kHz, 60 kHz, or 120 kHz, $T_{proc,1}$ is 3, 5, 9, or 17 slots. In the case that $T_{2min}$ is less than a remaining delay budget of a service, $T_{2min} \leq T_2 \leq$ the remaining delay budget of the service. Otherwise, $T_2$ is equal to a packet delay budget (PDB) of a data packet in units of slots. A set of values for $T_{2min}$ is $\{1, 5, 10, 20\}*2^{\mu}$ slots, wherein $\mu = 0, 1, 2,$ or 3, respectively corresponding to the subcarrier spacings of 15 kHz, 30 kHz, 60 kHz, or 120 kHz. The terminal device determines $T_{2min}$ from the value set based on the priority of to-be-transmitted data of the terminal device. [n+T1, n+T2] is referred to as the resource selection window.

The terminal device performs resource monitoring from n-T0 to n-$T_{proc,0}$, and a value of the T0 is 100 milliseconds or 1100 milliseconds. In the case that the subcarrier spacing is 15 kHz, 30 kHz, 60 kHz, or 120 kHz, $T_{proc,0}$ is 1 slot, 1 slot, 2 slots, or 4 slots. [n-T0 to n-$T_{proc,0}$] is referred to as a resource sensing window.

The second mode is performed according to the following two steps:

In step 1, a physical layer of the terminal device excludes a resource unsuitable for SL transmission from the resource selection window based on a channel monitoring result.

The terminal device selects all available resources belonging to a resource pool used by the terminal device within the resource selection window as a set of resources A. Any resource in the set of resources A is denoted as R (x, y), wherein x and y respectively indicate a frequency domain position and a time domain position of the resource. An initial quantity of resources in the set of resources A is denoted as Mtotal.

In step 1-1, in the case that the terminal device transmits the data in a slot a within the sensing window and does not perform monitoring, the terminal device determines whether a slot a+q*Prxlg overlaps with a resource R (x, y+j*Ptxlg). In the case that they overlap, the resource R (x, y) is excluded from the set of resources A. j=0, 1, 2, 3, ..., and C-1. C is determined based on a random counter value generated by the terminal device. Ptxlg represents the number of logical slots converted from a resource reservation period Ptx of the terminal device. Prxlg represents the number of logical slots converted from Prx, wherein Prx represents any resource reservation period allowed in the resource pool. In the case that Prx<Tscal and n-m<=Prxlg, Q=[Tscal/Prx]. Otherwise, Q=1. Tscal is equal to a value of milliseconds converted from T2.

In step 1-2, in the case that the terminal device monitors, on a $v^{th}$ frequency domain resource E (v, m) within a slot m in the sensing window, first SCI transmitted over a PSCCH, the terminal device measures SL-RSRP of the PSCCH or SL-RSRP of a PSSCH scheduled by the PSCCH (namely, the SL-RSRP of the corresponding PSSCH that is transmitted in the same slot as the PSCCH). In the case that the measured SL-RSRP is greater than an SL-RSRP threshold and intra-transport block (TB) resource reservation is activated in the resource pool used by the UE, the terminal device assumes that first SCI containing the same content is received on a slot m+q*Prxlg. q=1, 2, 3, ..., and Q. In the case that Prx< Tscal and n-m<=Prxlg, Q=[Tscal/Prx]. Otherwise, Q=1. The Tscal is equal to the value of milliseconds converted from T2. Prxlg represents the number of logical slots converted from the Prx, wherein Prx is a resource reservation period indicated by a "resource reservation period" field in the first SCI that is transmitted over the PSCCH monitored by the terminal device. The terminal device determines whether resources indicated by "Time resource assignment" and "Frequency resource assignment" fields in the first SCI received in the slot m and a $Q^{th}$ piece of first SCI that is assumed to be received overlap with the resource R (x, y+j*Ptxlg). In the case that they overlap, the corresponding resource R (x, y) is excluded from the set of resources A. j=0, 1, 2, 3, ..., and C-1. C is determined based on the random counter value generated by the terminal device. Ptxlg represents the number of logical slots converted from the Ptx, wherein Ptx is a resource reservation period determined by the terminal device that performs resource selection.

The RSRP threshold is determined based on a priority P1 carried over the PSCCH monitored by the terminal device and the priority P2 of the to-be-transmitted data of the terminal device. A configuration of the resource pool used by the terminal device includes an SL-RSRP threshold table, and the SL-RSRP threshold table contains SL-RSRP thresholds corresponding to all priority combinations. The configuration of the resource pool may be configured by a network or may be pre-configured. In the case that remaining resources in the set of resources A after the resource exclusion are less than M_total*X%, the SL-RSRP threshold is increased by 3 dB, and step 1 is performed again. Possible values for X are {20, 35, 50}. The configuration of the resource pool used by the terminal device includes a corresponding relationship between a priority and the possible value for X. The terminal device determines a value for X based on the priority of the to-be-transmitted data and the corresponding relationship.

The physical layer of the terminal device reports the set of resources A after the resource exclusion as a candidate set of resources to a higher layer, namely a medium access control (MAC) layer of the terminal device.

In step 2, the MAC layer of the terminal device randomly selects a resource from the reported candidate set of resources and transmits the data over the resource. That is, the terminal device randomly selects the resource from the candidate set of resources and transmits the data over the resource.

4. Resource allocation enhancement in NR-V2X communication

In the second mode (which is also referred to as the second transmission mode), a terminal device randomly selects a transmission resource from a resource pool or selects a transmission resource based on a monitoring result. This resource selection mode may avoid interference between terminal devices to some extent, but still has the following problems:

Hidden node: As shown in FIG. 6, a terminal device B selects a resource based on monitoring and transmits SL data to a terminal device A over the resource. The terminal device B and a terminal device C fail to monitor each other's transmission because these two terminal devices are far away from each other. Therefore, the terminal device B and the terminal device C may choose the same transmission resource, and data transmitted by the terminal device C interferes with data transmitted by the terminal device B. This is a problem of the hidden node.

Half-duplex problem: In the case that a terminal device selects a transmission resource by monitoring, within a sensing window, where the terminal device transmits SL data in a slot, due to a limitation of a half-duplex mode, the terminal device fails to receive, in the slot, data from another terminal device, and there is no monitoring result. Therefore, when performing resource exclusion, the terminal device excludes all resources corresponding to the slot within a selection window to avoid interference with the another terminal device. Due to the limitation of the half-duplex mode, the terminal device may exclude many resources that do not need to be excluded.

Terminal device exposure: As shown in FIG. 7, both a transmitter terminal device B and a transmitter terminal device C may monitor each other, but a target receiver terminal device A of the transmitter terminal device B is far away from the transmitter terminal device C, and a target receiver terminal device D of the transmitter terminal device C is far away from the transmitter terminal device B. In this case, even if the transmitter terminal device B and the transmitter terminal device C use the same time frequency resource, reception of respective target receiver terminal devices of the transmitter terminal device B and the transmitter terminal device C is not affected. However, because the two parties are geographically close to each other, signal received power detected by the two parties in a monitoring process may be very high, and therefore, the two parties may choose orthogonal video resources. Ultimately, resource utilization efficiency may be decreased.

Power consumption: In the above monitoring process, a terminal device needs to continuously perform resource monitoring to determine which resources are available. However, the continuous resource monitoring by the terminal device requires a large energy consumption. This is not a problem for a vehicle-mounted terminal device because the vehicle-mounted terminal has power supply equipment. However, for a handheld terminal device, an excessive power consumption can quickly cause the terminal device to run out of power. Therefore, how to reduce an power consumption of the terminal device is also a problem that needs to be considered in a resource selection process.

Due to the problems in the resource selection process in the above second transmission mode, a resource selection scheme based on inter-UE coordination has been introduced. That is, based on the resource monitoring used in the second transmission mode, one terminal device (UE-A) may transmit an inter-UE coordination (IUC) message to another terminal device (UE-B) to assist the UE-B in resource selection. In the case that an explicit request is received from the UE-B or a specific condition is met, the UE-A may determine the IUC message based on a resource monitoring result. The IUC message may include an IUC resource set (IUC-RS). The UE-A transmits the IUC-RS to the UE-B. The IUC-RS may be a set of resources suitable for use by the UE-B. When selecting a resource for transmitting SL data to a target receiver terminal device, the UE-B may preferentially select the resource from the available IUC-RS, such that reliability of receiving the SL data by the target receiver terminal device is improved. The IUC-RS may alternatively be a set of resources unsuitable for use by the UE-B. The UE-B avoids selecting a resource from the IUC-RS, such that problems such as a hidden terminal device and the limitation of the half-duplex mode are avoided.

5. SL-based positioning

In 3GPP R-17, 3GPP RAN conducted research on "NR positioning enhancement" and "scenarios and requirements for NR positioning use cases within coverage, partially within coverage, and beyond coverage". The research on the "scenarios and requirements for NR positioning use cases within coverage, partially within coverage, and beyond coverage" focuses on V2X and public safety use cases, and research results are recorded in TR38.845. In addition, SA1 has established a requirement for a "ranging-based service" in TS22.261 and a positioning accuracy requirement for IIoT usage in the scenario beyond the coverage in TS22.104. The 3GPP needs to research and develop an SL positioning solution to support the use cases, scenarios, and requirements determined in these activities. In order to improve positioning accuracy, especially for positioning of a terminal device beyond coverage of a cellular network, the 3GPP introduces positioning based on an SL PRS in Rel-18. According to a current conclusion, the SL PRS may be transmitted within a dedicated resource pool or may be transmitted within a shared resource pool together with another SL channel.

Some embodiments of the present disclosure provide a method for SL communication. The SL communication method selects, based on coordination information between terminal devices, a resource for transmitting an SL PRS, such that quality of the SL PRS resource selected by the terminal device is improved, and hence accuracy of SL positioning is enhanced. The coordination information includes information for indicating a set of resources suitable for use by the terminal device, and/or a set of resources unsuitable for use by the terminal device.

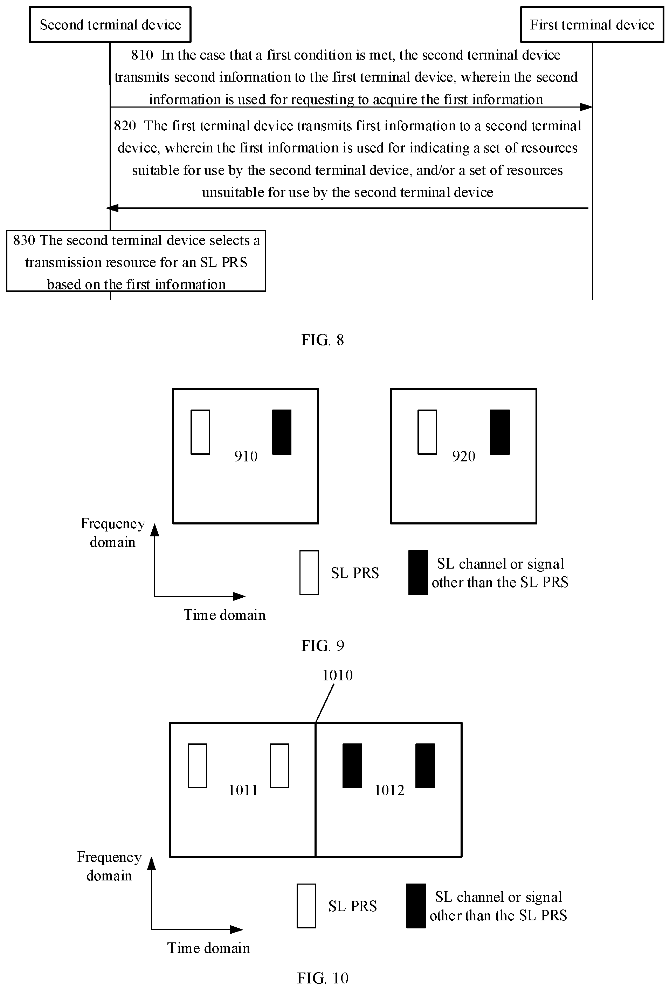

FIG. 8 is a flowchart of a method for SL communication according to some embodiments of the present disclosure. The SL communication method may include at least one of the following processes 810 to 830.

In process 820, a first terminal device transmits first information to a second terminal device, wherein the first information is used for indicating a set of resources suitable for use by the second terminal device, and/or a set of resources unsuitable for use by the second terminal device.

Correspondingly, the second terminal device receives the first information from the first terminal device.

In some embodiments, a message for carrying the first information is a MAC CE.

In some embodiments, the message for carrying the first information includes sixth information. The sixth information is used for indicating whether the first information is used for transmission of an SL PRS or used for transmission of an SL channel or signal other than the SL PRS.

In some embodiments, process 810 is performed before the process 820. In the case that a first condition is met, the second terminal device transmits second information to the first terminal device, wherein the second information is used for requesting to acquire the first information.

In some embodiments, the first condition includes at least one of: the SL PRS to be transmitted to the first terminal device is present; SL information other than the SL PRS to be transmitted to the first terminal device is present; or a trigger condition determined by the second terminal device based on self-implementation for transmitting the second information is met.

In some embodiments, in the case that the SL PRS to be transmitted to the first terminal device is present, the second terminal device transmits the second information to the first terminal device. For example, before transmitting the SL PRS to the first terminal device, the second terminal device transmits the second information to the first terminal device.

In some embodiments, in the case that the SL information other than the SL PRS, transmitted to the first terminal device is present, the second terminal device transmits the second information to the first terminal device. For example, before transmitting a mode of transmitting the SL PRS to the first terminal device, the second terminal device transmits the second information to the first terminal device.

In some embodiments, in the case that the trigger condition determiner by the second terminal device based on the self-implementation for transmitting the second information is met, the second terminal device transmits the second information to the first terminal device.

In some embodiments, a message for carrying the second information is at least one of: a MAC control element (CE) or SCI.

For example, the second information is separately carried by the MAC CE. For example, the second information is separately carried by second-stage SCI. For example, the second information is jointly carried by the MAC CE and the second-stage SCI.

In some embodiments, the first information is transmitted by the first terminal device in the case that a second condition is met. The second condition includes at least one of: the second information is received from the first terminal device, wherein the second information is used for requesting to acquire the first information; other information to be transmitted together with the first information to the second terminal device is present; or a trigger condition determined by the first terminal device based on self-implementation for transmitting the first information is met.

In some embodiments, in the case that the second information is received from the second terminal, the first terminal device transmits the first information to the second terminal device.

In some embodiments, in the case that the other information to be transmitted together with the first information to the second terminal device is present, the first terminal device transmits the first information to the second terminal device.

In some embodiments, in the case that the trigger condition determined by the first terminal device based on self-implementation for transmitting the first information is met, the first terminal device transmits the first information to the second terminal device.

In some embodiments, in the case that the number of physical resource blocks (PRBs) contained in a resource pool requested by the second information is greater than a product of the number of subchannels contained in the resource pool and a size of the subchannel, the information for carrying the second information includes seventh information. The seventh information is used for indicating that a frequency domain size of a resource requested by the second information is the number of PRBs contained in the resource pool.

In some embodiments, the second information is carried in a 2-C format of the second-stage SCI, and the seventh information is carried in a "Number of Subchannel" bit field. For example, a value indicated by the "Number of Subchannel" bit field is greater than or equal to the number of subchannels contained in the resource pool. For example, the "Number of Subchannel" bit field

may contain $[\log_2 N^{SL}_{subChannel}] + 1$ bits, wherein

$N^{SL}_{subChannel}$ represents the number of subchannels contained in the resource pool.

In some embodiments, the second information is carried in the MAC CE, and the seventh information is carried in a "Number of Subchannel" field. For example, a value indicated by the "Number of Subchannel" field in the MAC CE is greater than or equal to the number of subchannels contained in the resource pool. For example, the value indicated by the "Number of Subchannel" field in the MAC CE is 27 or 28.

In some embodiments, the second information is jointly carried by the second-stage SCI and the MAC CE, and the seventh information is carried in the "Number of Subchannel" bit field and the "Number of Subchannel" field. For example, a value indicated by the "Number of Subchannel" bit field and the "Number of Subchannel" field is equal to the number of subchannels contained in the resource pool.

In some embodiments, the number of PRBs contained in the resource pool is indicated by a resource pool configuration parameter "sl-RB-Number".

In some embodiments, the number of subchannels contained in the resource pool is indicated by a resource pool configuration parameter "sl-NumSubchannel".

In some embodiments, the size of the subchannel contained in the resource pool is indicated by a resource pool configuration parameter "sl-Subchannel-Size".

In process 830, the second terminal device selects a transmission resource for the SL PRS based on the first information.

In some embodiments, the second terminal device selects the transmission resource for the SL PRS from the set of resources suitable for use by the second terminal device; and/or the second terminal device selects the transmission resource for the SL PRS from a remaining resource excluding the set of resources unsuitable for use by the second terminal device.

In some embodiments, the first information is used for indicating the set of resources suitable for use by the second terminal device, the second terminal selects the transmission resource for the SL PRS from the set of resources suitable for use by the second terminal device.

In some embodiments, the first information is used for indicating the set of resources unsuitable for use by the second terminal device, the second terminal device selects the transmission resource for the SL PRS from the remaining resource excluding the set of resources unsuitable for use by the second terminal device.

In some embodiments, the first information is used for indicating the set of resources suitable for use by the second terminal device and the set of resources unsuitable for use by the second terminal device, the second terminal device selects the transmission resource for the SL PRS from the set of resources suitable for use by the second terminal device and the remaining resource excluding the set of resources unsuitable for use by the second terminal device.

In the technical solutions according to the embodiments of the present disclosure, based on the set of resources suitable for use by the second terminal device and/or the set of resources unsuitable for use by the second terminal device that are/is indicated by the first information transmitted by the first terminal device, the second terminal device selects the transmission resource for the SL PRS from the set of resources suitable for use by the second terminal device and/or the remaining resource excluding the set of resources unsuitable for use by the second terminal device. In this way, quality of the SL PRS resource selected by the second terminal device is improved, and hence accuracy of SL positioning is improved.

FIG. 9 is a flowchart of a method for SL communication according to some embodiments of the present disclosure. The SL PRS is transmitted within a shared resource pool 910, or the SL PRS is transmitted within a dedicated resource pool 920, wherein a resource within the dedicated resource pool 920 is further used for transmitting the SL channel or signal other than the SL PRS.

In some embodiments, the SL channel includes a PSCCH and a PSSCH.

In some embodiments, the transmission of the SL PRS may provide a PSCCH indication. In the case that a value of a "Priority" field in a PSCCH indicating the transmission of the SL PRS is the same as a value of a "Priority" field in a PSCCH indicating the transmission of the SL channel or signal other than the SL PRS, the SL PRS and the SL channel or signal other than the SL PRS that are scheduled by the two PSCCHs have a same absolute priority.

In some embodiments, an available resource reservation period within the resource pool configured by a radio resource control (RRC) parameter "SL-ResourceReservePeriod" is applicable to the SL PRS and the SL channel or signal other than the SL PRS.

In some embodiments, the second information does not distinguish whether the requested first information is used for transmission of the SL PRS or used for transmission of the SL channel or signal other than the SL PRS.

In some embodiments, the second information is used for requesting to acquire the first information indicating the set of resources suitable for use by the second terminal device. In the case that the first terminal device is a target receiver terminal device to which the second terminal device transmits the SL PRS, or in the case that the first terminal device is a target receiver terminal device to which the second terminal device transmits the SL channel or signal other than SL PRS, when the first terminal device determines the set of resources suitable for use by the second terminal device, if the first terminal device does not want to perform SL reception in a slot n due to a half-duplex operation, the first terminal device should exclude a resource in the slot n from the determined set of resources suitable for use by the second terminal device. In this case, the second terminal device is only capable of selecting the transmission resource for the SL PRS and/or the SL channel or signal other than SL PRS from the set of resources suitable for use by the second terminal device.

In some embodiments, the second information is used for requesting to acquire the first information indicating the set of resources unsuitable for use by the second terminal device. In the case that the first terminal device is the target receiver terminal device to which the second terminal device transmits the SL PRS, or in the case that the first terminal device is the target receiver terminal device to which the second terminal device transmits the SL channel or signal other than SL PRS, when the first terminal device determines the set of resources unsuitable for use by the second terminal device, if the first terminal device does not want to perform the SL reception in the slot n due to the half-duplex operation, the first terminal device should include the resource in the slot n in the determined set of resources unsuitable for use by the second terminal device. In this case, the second terminal device selects the transmission resource for the SL PRS and/or the SL channel or signal other than SL PRS from the remaining resource excluding the set of resources unsuitable for use by the second terminal device.

In some embodiments, the second information distinguishes whether the requested first information is used for transmission of the SL PRS or used for transmission of the SL channel or signal other than the SL PRS.

In some embodiments, the message for carrying the second information includes third information. The third information is used for indicating whether the first information requested by the second information is used for transmission of the SL PRS or used for transmission of the SL channel or signal other than the SL PRS.

For example, the second information is carried in the 2-C format of the second-stage SCI, the third information is carried in a "Padding bits" bit field.

For example, the second information is carried in the MAC CE, the third information is carried in an "R" field of an "Inter-UE Coordination Request MAC CE"; or a new field is added in the "Inter-UE Coordination Request MAC CE" to carry the third information.

In some embodiments, the second information is used for requesting to acquire the first information indicating the set of resources suitable for use by the second terminal device, and the first information requested by the second information is used for transmission of the SL PRS. In the case that the first terminal device is the target receiver terminal device to which the second terminal device transmits the SL PRS, when the first terminal device determines the set of resources suitable for use by the second terminal device, if the first terminal device does not want to perform the SL reception in the slot n due to the half-duplex operation, the first terminal device should exclude the resource in the slot n from the determined set of resources suitable for use by the second terminal device. In this case, the second terminal device is only capable of selecting the transmission resource for the SL PRS from the set of resources suitable for use by the second terminal device.

In some embodiments, the second information is used for requesting to acquire the first information indicating the set of resources unsuitable for use by the second terminal device, and the first information requested by the second information is used for transmission of the SL PRS. In the case that the first terminal device is the target receiver terminal device to which the second terminal device transmits the SL PRS, when the first terminal device determines the set of resources unsuitable for use by the second terminal device, if the first terminal device does not want to perform the SL reception in the slot n due to the half-duplex operation, the first terminal device should include the resource in the slot n in the determined set of resources unsuitable for use by the second terminal device. In this case, the second terminal device selects the transmission resource for the SL PRS from the remaining resource excluding the set of resources unsuitable for use by second terminal device.

In some embodiments, in the case that the second information is used for requesting the set of resources suitable for use by the second terminal device, the second information distinguishes whether the requested first information is used for transmission of the SL PRS or used for transmission of the SL channel or signal other than the SL PRS. In the case that the second information is used for requesting the set of resources unsuitable for use by the second terminal device, the second information does not distinguish whether the requested first information is used for transmission of the SL PRS or used for transmission of the SL channel or signal other than the SL PRS.

In some embodiments, the message for carrying the second information includes the third information. The third information is used for indicating whether the first information requested by the second information is used for transmission of the SL PRS or used for transmission of the SL channel or signal other than the SL PRS.

For example, the second information is carried in the 2-C format of the second-stage SCI, and a value indicated by a "Resource set type" bit field is 0, the third information is carried in the "Padding bits" bit field.

For example, in the case that the second information is carried in the MAC CE, and a value indicated by an "RT" field is 0, the third information is carried in the "R" field of the "Inter-UE Coordination Request MAC CE"; or the new field is added in the "Inter-UE Coordination Request MAC CE" to carry the third information.

In some embodiments, the second information is used for requesting to acquire the first information for indicating the set of resources suitable for use by the second terminal device, and the first information requested by the second information is used for transmission of the SL PRS. In the case that the first terminal device is the target receiver terminal device to which the second terminal device transmits the SL PRS, when the first terminal device determines the set of resources suitable for use by the second terminal device, if the first terminal device does not want to perform the SL reception in the slot n due to the half-duplex operation, the first terminal device should exclude the resource in the slot n from the determined set of resources suitable for use by the second terminal device. In this case, the second terminal device is only capable of selecting the transmission resource for the SL PRS from the set of resources suitable for use by the second terminal device.

In some embodiments, the second information is used for requesting to acquire the first information for indicating the set of resources unsuitable for use by the second terminal device. In the case that the first terminal device is the target receiver terminal device to which the second terminal device transmits the SL PRS, or in the case that the first terminal device is the target receiver terminal device to which the second terminal device transmits the SL channel or signal other than SL PRS, when the first terminal device determines the set of resources unsuitable for use by the second terminal device, if the first terminal device does not want to perform the SL reception in the slot n due to the half-duplex operation, the first terminal device should include the resource in the slot n in the determined set of resources unsuitable for use by the second terminal device. In this case, the second terminal device selects the transmission resource for the SL PRS and/or the SL channel or signal other than SL PRS from the remaining resource excluding the set of resources unsuitable for use by the second terminal device.

In some embodiments, in the case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS. The second information is understood as that the requested first information is used for transmission of the SL PRS.

In some embodiments, the second information is used for requesting to acquire the first information indicating the set of resources suitable for use by the second terminal device. In the case that the first terminal device is the target receiver terminal device to which the second terminal device transmits the SL PRS, when the first terminal device determines the set of resources suitable for use by the second terminal device, if the first terminal device does not want to perform the SL reception in the slot n due to the half-duplex operation, the first terminal device should exclude the resource in the slot n from the determined set of resources suitable for use by the second terminal device. In this case, the second terminal device is only capable of selecting the transmission resource for the SL PRS from the set of resources suitable for use by the second terminal device.

In some embodiments, the second information is used for requesting to acquire the first information indicating the set of resources unsuitable for use by the second terminal device. In the case that the first terminal device is the target receiver terminal device to which the second terminal device transmits the SL PRS, when the first terminal device determines the set of resources unsuitable for use by the second terminal device, if the first terminal device does not want to perform the SL reception in the slot n due to the half-duplex operation, the first terminal device should include the resource in the slot n in the determined set of resources unsuitable for use by the second terminal device. In this case, the second terminal device selects the transmission resource for the SL PRS from the remaining resource excluding the set of resources unsuitable for use by second terminal device.

In the technical solutions according to the embodiments of the present disclosure, in the case that the SL PRS is transmitted within the shared resource pool, or in the case that the SL PRS is transmitted within the dedicated resource pool and the resource within the dedicated resource pool is further used for transmitting the SL channel or signal other than THE SL PRS, the first terminal device determines the first information based on content of the first information requested by the second information transmitted by the second terminal device. In this way, accuracy of the first information is improved, and the quality of the SL PRS resource selected by the second terminal device is further improved, and hence the accuracy of the SL positioning is improved.

FIG. 10 is a flowchart of a method for SL communication according to some embodiments of the present disclosure. The SL PRS is transmitted within a dedicated resource pool 1010, and the dedicated resource pool 1010 includes a first resource subset 1011 and a second resource subset 1012. The first resource subset 1011 is a resource subset used for transmitting the SL PRS, and the second resource subset 1012 is a resource subset used for transmitting the SL channel or signal other than the SL PRS.

In some embodiments, the SL channel includes a PSCCH and a PSSCH.

In some embodiments, the second information distinguishes whether the requested first information is used for transmission of the SL PRS or used for transmission of the SL channel or signal other than the SL PRS.

In some embodiments, the message for carrying the second information includes fourth information used for indicating a resource selection window.

For example, the second information is carried in the 2-C format of the second-stage SCI, the fourth information is carried in a "Resource selection window location" bit field.

For example, the second information is carried in the MAC CE, the third information is carried in a resource selection window indication field "RSWL" of an "Inter-UE Coordination Request MAC CE".

In some embodiments, in the case that a resource belonging to the first resource subset is present within a start time unit of the resource selection window indicated by the fourth information, the first information requested by the second information is used for transmission of the SL PRS; or in the case that no resource belonging to the first resource subset is present within a start time unit of the resource selection window indicated by the fourth information, the first information requested by second information is used for transmission of the SL channel or signal other than the SL PRS.

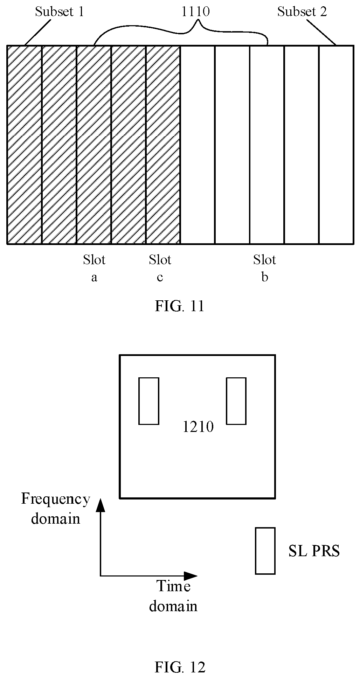

For example, as shown in FIG. 11, the start time unit of the resource selection window 1110 indicated by the fourth information is a slot a, and an end time unit is a slot b. In the case that a subset 1 is the first resource subset, that is, a resource belonging to the first resource subset is present in the slot a, the first information requested by the second information is used for transmission of the SL PRS. In the case that a subset 2 is the first resource subset, that is, no resource belonging to the first resource subset is present in the slot a, the first information requested by the second information is used for transmission of the SL channel or signal other than the SL PRS.

In some embodiments, in the case that the first information requested by the second information is used for transmission of the SL PRS, the resource selection window is understood to include a resource belonging to the first resource subset within a time period from the start time unit to the end time unit. In the case that the first information requested by the second information is used for transmission of the SL channel or signal other than the SL PRS, the resource selection window is understood to include a resource belonging to the second resource subset within the time period from start time unit to the end time unit.

For example, as shown in FIG. 11, the start time unit of the resource selection window 1110 indicated by the fourth information is the slot a and the end time unit is the slot b, in the case that the first information requested by the second information is used for transmission of the SL PRS, the resource selection window is understood to include a resource belonging to the first resource subset within a time period from the slot a to the slot b. For example, when the subset 1 is the first resource subset, the resource selection window is understood to include resources that are of the subset 1 and overlapped with the resource selection window 1110, namely, resources from the slot a to a slot c. In the case that the first information requested by the second information is used for transmission of the SL channel or signal other than the SL PRS, the resource selection window is understood to include a resource belonging to the second resource subset within the time period from the slot a to the slot b. For example, when the subset 1 is the second resource subset, the resource selection window is understood to include the resources that are of the subset 1 and overlapped with the resource selection window 1110, namely, the resources from the slot a to the slot c.

In some embodiments, in the case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS. The second information is understood as that the requested first information is used for transmission of the SL PRS.

In some embodiments, the message for carrying the second information includes the fourth information used for indicating the resource selection window.

For example, the second information is carried in the 2-C format of the second-stage SCI, the fourth information is carried in the "Resource selection window location" bit field.

For example, the second information is carried in the MAC CE, the third information is carried in the resource selection window indication field "RSWL" of the "Inter-UE Coordination Request MAC CE".

For example, as shown in FIG. 11, the start time unit of the resource selection window 1110 indicated by the fourth information is the slot a, and the end time unit is the slot b. In the case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS. The second information is understood as that the requested first information is used for transmission of the SL PRS, and the resource selection window is understood that the resources from the slot a to the slot b belong to the first resource subset.

In some embodiments, the second information is used for requesting to acquire the first information indicating the set of resources suitable for use by the second terminal device. In the case that the first terminal device is a target receiver terminal device to which the second terminal device transmits the SL PRS, when the first terminal device determines the set of resources suitable for use by the second terminal device, if the first terminal device does not want to perform SL reception in a slot n due to a half-duplex operation, the first terminal device should exclude a resource in the slot n from the determined set of resources suitable for use by the second terminal device. In this case, the second terminal device is only capable of selecting the transmission resource for the SL PRS from the set of resources suitable for use by the second terminal device.

In some embodiments, the second information is used for requesting to acquire the first information indicating the set of resources unsuitable for use by the second terminal device. In the case that the first terminal device is the target receiver terminal device to which the second terminal device transmits the SL PRS, when the first terminal device determines the set of resources unsuitable for use by the second terminal device, if the first terminal device does not want to perform the SL reception in the slot n due to the half-duplex operation, the first terminal device should include the resource in the slot n in the determined set of resources unsuitable for use by the second terminal device. In this case, the second terminal device selects the transmission resource for the SL PRS from the remaining resource excluding the set of resources unsuitable for use by second terminal device.

In the technical solutions according to the embodiments of the present disclosure, in the case that the SL PRS is transmitted within the dedicated resource pool, and the dedicated resource pool includes the first resource subset for transmitting the SL PRS and the second resource subset for transmitting the SL channel or signal other than the SL PRS, the first terminal device determines the first information based on content of the first information requested by the second information transmitted by the second terminal device. In this way, accuracy of the first information is improved, and the quality of the SL PRS resource selected by the second terminal device is further improved, and hence the accuracy of the SL positioning is improved.

FIG. 12 is a schematic diagram of a method for SL communication according to some embodiments of the present disclosure. The SL PRS is transmitted within a dedicated resource pool 1210, and the dedicated resource pool is not used for transmitting the SL channel or signal other than the SL PRS.

In some embodiments, the dedicated resource pool is associated with one SL communication resource pool, and one SL communication resource pool is associated with only one dedicated resource pool.

In some embodiments, an association relationship between the dedicated resource pool and an SL communication resource pool is indicated by configuration signaling in a resource pool configuration process.

In some embodiments, in the case that the first information requested by the second information is used for transmission of the SL PRS, the second information is transmitted within the SL communication resource pool associated with the dedicated resource pool.

That is, in the case that the first information requested by the second information is used for transmission of the SL PRS, regardless of whether the second information is used for requesting to acquire the first information indicating the resource suitable for use by the second terminal device or used for requesting to acquire the first information indicating the set of resources unsuitable for use by the second terminal device, the second information is transmitted within the SL communication resource pool associated with the dedicated resource pool.

For example, the message for carrying the second information includes third information. The third information is used for indicating whether the first information requested by the second information is used for transmission of the SL PRS or used for transmission of the SL channel or signal other than the SL PRS.

For example, the second information is carried in the MAC CE, the third information is carried in an "R" field of an "Inter-UE Coordination Request MAC CE". In the case that the "R" field is set to 1, it indicates that the first information requested by the second message is used for transmission of the SL PRS. Alternatively, the third information is carried by a new MAC CE different from the "Inter-UE Coordination Request MAC CE". In the case that the new MAC CE is identified by a logical channel ID greater than 62, it indicates that the first information requested by the second information is used for transmission of the SL PRS.

In some embodiments, the message for carrying the first information includes sixth information. The sixth information is used for indicating whether the first information is used for transmission of the SL PRS or used for transmission of the SL channel or signal other than the SL PRS.

In some embodiments, the first information is carried in the MAC CE, and the sixth information is carried in the "R" field of the "Inter-UE Coordination Information MAC CE". In the case that one or more "R" fields is set to 1, it indicates that the first information is used for transmission of the SL PRS. For example, one or more of the last four "R" fields of the "Inter-UE Coordination Information MAC CE" are set to 1 to indicate that the first information is used for transmission of the SL PRS.

For example, the sixth information is carried by the new MAC CE different from the "Inter-UE Coordination Information MAC CE". In the case that the new MAC CE is identified by the logical channel ID greater than 62, it indicates that the first information is used for transmission of the SL PRS.

In some embodiments, the dedicated resource pool is associated with one SL communication resource pool, and one SL communication resource pool is associated with a plurality of dedicated resource pools.

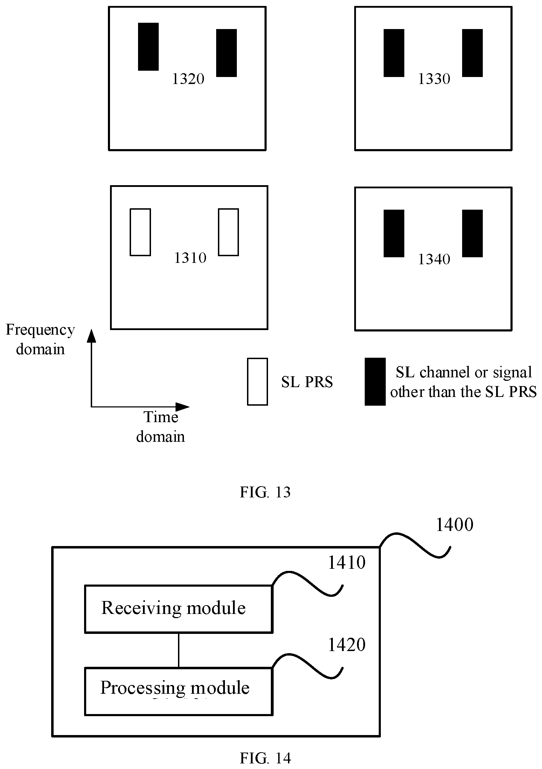

For example, as shown in FIG. 13, the SL communication resource pool 1310 is associated with dedicated resource pools 1320, 1330, and 1340.

In some embodiments, an association relationship between the plurality of dedicated resource pools and the SL communication resource pool, as well as an index corresponding to each dedicated resource pool are indicated by the configuration signaling in the resource pool configuration process.

In some embodiments, in the case that the first information requested by the second information is used for transmission of the SL PRS, the second information is transmitted within the SL communication resource pool associated with the dedicated resource pool.

That is, in the case that the first information requested by the second information is used for transmission of the SL PRS, regardless of whether the second information is used for requesting to acquire the first information indicating the resource suitable for use by the second terminal device or used for requesting to acquire the first information indicating the set of resources unsuitable for use by the second terminal device, the second information is transmitted within the SL communication resource pool associated with the dedicated resource pool.

In some embodiments, the message for carrying the second information includes fifth information, wherein the fifth information is used for indicating the index of the dedicated resource pool.

In some embodiments, the second information is carried by the new MAC CE different from the "Inter-UE Coordination Request MAC CE", the new MAC CE is identified by the logical channel ID greater than 62, and the new MAC CE contains one field for carrying the fifth information.

In some embodiments, the message for carrying the first information includes eighth information, wherein the eighth information is used for indicating the index of the dedicated resource pool.

In some embodiments, the first information is carried by the "Inter-UE Coordination Information MAC CE", and one or more "R" fields of the MAC CE is used for indicating the index of the dedicated resource pool corresponding to the first information. For example, one or more of the last four "R" fields are used for indicating the index of the dedicated resource pool corresponding to the first information. In some embodiments, in order to distinguish from the first information used for transmission of the SL channel or signal other than the SL PRS, in the case that all the "R" fields used for indicating the index of the dedicated resource pool are set to 0, they are not used for indicating the index of the dedicated resource pool.

For example, the first information is carried by the new MAC CE different from the "Inter-UE Coordination Information MAC CE", the new MAC CE is identified by the logical channel ID greater than 62, and the new MAC CE contains one field for carrying the eighth information.

In the technical solutions according to the embodiments of the present disclosure, in the case that the SL PRS is transmitted within the dedicated resource pool and the dedicated resource pool is not used for transmitting the SL channel or signal other than the SL PRS, the first terminal device determines the first information based on content of the first information requested by the second information transmitted by the second terminal device. In this way, accuracy of the first information is improved, and the quality of the SL PRS resource selected by the second terminal device is further improved, and hence the accuracy of the SL positioning is improved.

The following are apparatus embodiments of the present disclosure, which may be used to perform the method embodiments of the present disclosure. For details not disclosed in the apparatus embodiments of the present disclosure, reference may be made to the method embodiments of the present disclosure.

FIG. 14 is a block diagram of an apparatus for SL communication according to some embodiments of the present disclosure. The apparatus for SL communication has functions for implementing the examples of the above method for SL communication. The function may be implemented by hardware, or may be implemented by hardware executing corresponding software. The apparatus for SL communication may be the second terminal device described above or may be provided in the second terminal device. As shown in FIG. 14, the apparatus 1400 may include a receiving module 1410 and a processing module 1420.

The receiving module 1410 is configured to receive first information from a first terminal device. The first information is used for indicating a set of resources suitable for use by the second terminal device, and/or a set of resources unsuitable for use by the second terminal device.

The processing module 1420 is configured to select a transmission resource for an SL PRS based on the first information.

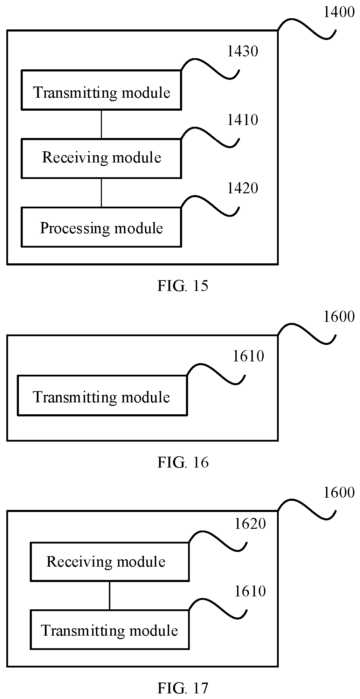

In some embodiments, as shown in FIG. 15, the apparatus 1400 further includes a transmitting module 1430.

The transmitting module 1430 is configured to: in a case that a first condition is met, transmit second information to the first terminal device, wherein the second information is used for requesting to acquire the first information.

The first condition includes at least one of the following items:

the SL PRS to be transmitted to the first terminal device is present;
SL information other than the SL PRS to be transmitted to the first terminal device is present; and
a trigger condition determined by the second terminal device based on self-implementation for transmitting the second information is met.

In some embodiments, the SL PRS is transmitted within a shared resource pool, or the SL PRS is transmitted within a dedicated resource pool, wherein a resource within the dedicated resource pool is further used for transmitting an SL channel or signal other than the SL PRS.

The second information does not distinguish whether the requested first information is used for transmission of the SL PRS or used for transmission of the SL channel or signal other than the SL PRS; or

the second information distinguishes whether the requested first information is used for transmission of the SL PRS or used for transmission of the SL channel or signal other than the SL PRS; or
in the case that the second information is used for requesting the set of resources suitable for use by the second terminal device, the second information distinguishes whether the requested first information is used for transmission of the SL PRS or used for transmission of the SL channel or signal other than the SL PRS; or in the case that the second information is used for requesting the set of resources unsuitable for use by the second terminal device, the second information does not distinguish whether the requested first information is used for transmission of the SL PRS or used for transmission of the SL channel or signal other than the SL PRS; or
in the case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

In some embodiments, a message for carrying the second information includes third information. The third information is used for indicating whether the first information requested by the second information is used for transmission of the SL PRS or used for transmission of the SL channel or signal other than the SL PRS.

In some embodiments, the SL PRS is transmitted within a dedicated resource pool, and the dedicated resource pool includes a first resource subset and a second resource subset. The first resource subset is a resource subset for transmitting the SL PRS, and the second resource subset is a resource subset for transmitting an SL channel or signal other than the SL PRS.

The second information distinguishes whether the requested first information is used for transmission of the SL PRS or used for transmission of the SL channel or signal other than the SL PRS; or

in the case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

In some embodiments, a message for carrying the second information includes fourth information used for indicating a resource selection window.

In the case that a resource belonging to the first resource subset is present within a start time unit of the resource selection window indicated by the fourth information, the first information requested by the second information is used for transmission of the SL PRS; or

in the case that no resource belonging to the first resource subset is present within a start time unit of the resource selection window indicated by the fourth information, the first information requested by the second information is used for transmission of the SL channel or signal other than the SL PRS.

In some embodiments, in a case that the first information requested by the second information is used for transmission of the SL PRS, the resource selection window is understood to include a resource belonging to the first resource subset within a time period from the start time unit to an end time unit; or

in a case that the first information requested by the second information is used for transmission of the SL channel or signal other than the SL PRS, the resource selection window is understood to include a resource belonging to the second resource subset within a time period from the start time unit to an end time unit.

In some embodiments, the SL PRS is transmitted within a dedicated resource pool, and the dedicated resource pool is not used for transmitting an SL channel or signal other than the SL PRS.

In the case that the first information requested by the second information is used for transmission of the SL PRS, the second information is transmitted within an SL communication resource pool associated with the dedicated resource pool.

In some embodiments, the dedicated resource pool is associated with one SL communication resource pool, and one SL communication resource pool is associated with only one dedicated resource pool.

In some embodiments, the dedicated resource pool is associated with one SL communication resource pool, and one SL communication resource pool is associated with a plurality of dedicated resource pools.

A message for carrying the second information includes fifth information, wherein the fifth information is used for indicating an index of the dedicated resource pool.

In some embodiments, the message for carrying the second information is at least one of a MAC CE or SCI.

In some embodiments, the first information is transmitted by the first terminal device in a case that a second condition is met, wherein the second condition includes at least one of the following items:

the second information is received from the first terminal device, wherein the second information is used for requesting to acquire the first information; other information to be transmitted together with the first information to the second terminal device is present; or

a trigger condition determined by the first terminal device based on self-implementation for transmitting for transmitting the first information is met.

In some embodiments, wherein selecting the transmission resource for the SL PRS based on the first information includes:

selecting the transmission resource for the SL PRS from the set of resources suitable for use by the second terminal device; and/or

selecting the transmission resource for the SL PRS from a remaining resource excluding the set of resources unsuitable for use by the second terminal device.

In some embodiments, a message for carrying the first information includes sixth information. The sixth information is used for indicating whether the first information is used for transmission of the SL PRS or used for transmission of the SL channel or signal other than the SL PRS.

In some embodiments, the message for carrying the first information is a MAC CE.

In the technical solutions according to the embodiments of the present disclosure, based on the set of resources suitable for use by the second terminal device and/or the set of resources unsuitable for use by the second terminal device that are/is indicated by the first information transmitted by the first terminal device, the second terminal device selects the transmission resource for the SL PRS from the set of resources suitable for use by the second terminal device and/or the remaining resource excluding the set of resources unsuitable for use by the second terminal device. In this way, quality of the SL PRS resource selected by the second terminal device is improved, and hence accuracy of SL positioning is improved.

FIG. 16 is a block diagram of an apparatus for SL communication according to some embodiments of the present disclosure. The apparatus has functions for implementing the examples of the above method for SL communication. The function may be implemented by hardware, or may be implemented by hardware executing corresponding software. The apparatus may be the first terminal device described above or may be provided in the first terminal device. As shown in FIG. 16, the apparatus 1600 may include a transmitting module 1610.

The transmitting module 1610 is configured to transmit first information to a second terminal device. The first information is used for indicating a set of resources suitable for use by the second terminal device, and/or a set of resources unsuitable for use by the second terminal device.

In some embodiments, as shown in FIG. 17, the apparatus 1600 further includes a receiving module 1620.

The receiving module 1620 is configured to receive second information from the second terminal device, wherein the second information is used for requesting to acquire the first information.

The second information is transmitted by the second terminal device in a case that a first condition is met, wherein the first condition includes at least one of the following items:

an SL PRS to be transmitted to the first terminal device is present;
SL information other than the SL PRS to be transmitted to the first terminal device is present; or
a trigger condition determined by the second terminal device based on self-implementation for transmitting the second information is met.

In some embodiments, the SL PRS is transmitted within a shared resource pool, or the SL PRS is transmitted within a dedicated resource pool, wherein a resource within the dedicated resource pool is further used for transmitting an SL channel or signal other than the SL PRS.

The second information does not distinguish whether the requested first information is used for transmission of the SL PRS or used for transmission of the SL channel or signal other than the SL PRS; or

the second information distinguishes whether the requested first information is used for transmission of the SL PRS or used for transmission of the SL channel or signal other than the SL PRS; or
in the case that the second information is used for requesting the set of resources suitable for use by the second terminal device, the second information distinguishes whether the requested first information is used for transmission of the SL PRS or used for transmission of the SL channel or signal other than the SL PRS; or in the case that the second information is used for requesting the set of resources unsuitable for use by the second terminal device, the second information does not distinguish whether the requested first information is used for transmission of the SL PRS or used for transmission of the SL channel or signal other than the SL PRS; or

in the case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

In some embodiments, a message for carrying the second information includes third information. The third information is used for indicating whether the first information requested by the second information is used for transmission of the SL PRS or used for transmission of the SL channel or signal other than the SL PRS.

In some embodiments, the SL PRS is transmitted within a dedicated resource pool, and the dedicated resource pool includes a first resource subset and a second resource subset. The first resource subset is a resource subset for transmitting the SL PRS, and the second resource subset is a resource subset for transmitting an SL channel or signal other than the SL PRS.

The second information distinguishes whether the requested first information is used for transmission of the SL PRS or used for transmission of the SL channel or signal other than the SL PRS; or

in the case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

In some embodiments, a message for carrying the second information includes fourth information used for indicating a resource selection window.

In the case that a resource belonging to the first resource subset is present within a start time unit of the resource selection window indicated by the fourth information, the first information requested by the second information is used for transmission of the SL PRS; or

in the case that no resource belonging to the first resource subset is present within a start time unit of the resource selection window indicated by the fourth information, the first information requested by the second information is used for transmission of the SL channel or signal other than the SL PRS.

In some embodiments, in a case that the first information requested by the second information is used for transmission of the SL PRS, the resource selection window is understood to include a resource belonging to the first resource subset within a time period from the start time unit to an end time unit; or

in a case that the first information requested by the second information is used for transmission of the SL channel or signal other than the SL PRS, the resource selection window is understood to include a resource belonging to the second resource subset within a time period from the start time unit to an end time unit.

In some embodiments, the SL PRS is transmitted within a dedicated resource pool, and the dedicated resource pool is not used for transmitting an SL channel or signal other than the SL PRS.

In the case that the first information requested by the second information is used for transmission of the SL PRS, the second information is transmitted within an SL communication resource pool associated with the dedicated resource pool.

In some embodiments, the dedicated resource pool is associated with one SL communication resource pool, and one SL communication resource pool is associated with only one dedicated resource pool.

In some embodiments, the dedicated resource pool is associated with one SL communication resource pool, and one SL communication resource pool is associated with a plurality of dedicated resource pools.

A message for carrying the second information includes fifth information, wherein the fifth information is used for indicating an index of the dedicated resource pool.

In some embodiments, the message for carrying the second information is at least one of a MAC CE and SCI.

In some embodiments, the first information is transmitted by the first terminal device in a case that a second condition is met, and the second condition includes at least one of the following items:

     the second information is received from the first terminal device, wherein the second information is used for requesting to acquire the first information; there is other information to be transmitted together with the first information to the second terminal device is present; or

     a trigger condition determined by the first terminal device based on self-implementation for transmitting the first information is met.

In some embodiments, a message for carrying the first information includes sixth information. The sixth information is used for indicating whether the first information is used for transmission of the SL PRS or used for transmission of the SL channel or signal other than the SL PRS.

In some embodiments, the message for carrying the first information is a MAC CE.

In the technical solutions according to the embodiments of the present disclosure, based on the set of resources suitable for use by the second terminal device and/or the set of resources unsuitable for use by the second terminal device that are/is indicated by the first information transmitted by the first terminal device, the second terminal device selects the transmission resource for the SL PRS from the set of resources suitable for use by the second terminal device and/or a remaining resource excluding the set of resources unsuitable for use by the second terminal device. In this way, quality of the SL PRS resource selected by the second terminal device is improved, and hence accuracy of SL positioning is improved.

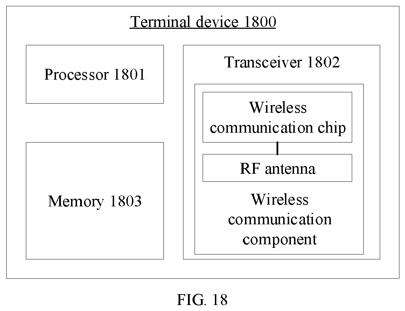

FIG. 18 is a schematic structural diagram of a terminal device according to some embodiments of the present disclosure. The terminal device 1800 may include a processor 1801, a transceiver 1802, and a memory 1803. The processor 1801 is configured to implement the functions of the above processing module 1420, and the transceiver 1802 is configured to implement the functions of the above transmitting module 1430, the transmitting module 1610, and/or the receiving module 1410, the receiving module 1620.

The processor 1801 includes one or more processing cores. The processor 1801 runs various functional applications and perform information processing by running one or more software programs and modules. The processor 1801 is configured to perform other processes performed by the terminal device in the above method embodiments except for the transmitting and receiving processes.

The transceiver 1802 may include a receiver and a transmitter. For example, the receiver and the transmitter may be implemented as a same wireless communication component, and the wireless communication component may include a wireless communication chip and a radio frequency (RF) antenna. The transceiver 1802 is configured to perform the transmitting and/or receiving processes performed by the terminal device in the above method embodiments.

The memory 1803 may be connected to the processor 1801 and the transceiver 1802.

The memory 1803 may be configured to store one or more computer programs run by the processor, and the processor 1801 is configured to run the computer program to implement each process in the above method embodiments.

In some exemplary embodiments, the processor 1801 is configured to receive first information from a first terminal device, wherein the first information is used for indicating a set of resources suitable for use by a second terminal device, and/or a set of resources unsuitable for use by the second terminal device; and select a transmission resource for an SL PRS based on the first information.

In other exemplary embodiments, the processor 1801 is configured to transmit first information to a second terminal device, wherein the first information is used for indicating a set of resources suitable for use by the second terminal device, and/or a set of resources unsuitable for use by second terminal device.

For details not described in the embodiments, reference may be made to the description in the above embodiments, and details are not described herein any further.

In addition, the memory may be practiced by any type of volatile or non-volatile storage device or a combination thereof. The volatile or non-volatile storage device includes but is not limited to: a magnetic disk or an optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

Some embodiments of the present disclosure further provide a computer-readable storage medium. The storage medium stores one or more computer programs, and the one or more computer programs is configured to be loaded and run by a processor to implement the above method for SL communication. In some embodiments, the computer-readable storage medium may include a ROM, a random-access memory (RAM), a solid-state drive (SSD), an optical disc, or the like. The RAM may include a resistance random access memory (ReRAM) and a dynamic random-access memory (DRAM).

The embodiments of the present disclosure further provide a chip, including a programmable logic circuit and/or one or more program instructions. The chip, when running, is caused to implement the above SL communication method.

The embodiments of the present disclosure further provide a computer program product. The computer program product includes one or more computer programs stored in a computer-readable storage medium. The one or more computer instructions, when read from the computer-readable storage medium and executed by a processor, cause the processor to implement the above SL communication method.

It should be understood that the term "indication" mentioned in the embodiments of the present disclosure may be a direct indication, an indirect indication, or an indication that an association relationship is present. For example, "A indicates B" may mean that A directly indicates B, for example, B may be obtained through A; or may mean that A indirectly indicates B, for example, A indicates C through which B may be obtained; or may mean an association relationship is present between A and B.

In the description of the embodiments of the present disclosure, the term "corresponding" may indicate a direct corresponding relationship or an indirect corresponding relationship between two items, or an association relationship between the two items, or a relationship such as indicating and being indicated, configuring and being configured, or the like.

In some embodiments of the present disclosure, the term "predefinition" may be implemented by pre-storing a corresponding code, a corresponding table, or another method that may be used to indicate relevant information in a device (such as a terminal device or a network device), and a specific implementation thereof is not limited in the present disclosure. For example, the term "predefined" may be "defined" in a protocol.

In some embodiments of the present disclosure, the term "protocol" may be a standard protocol in the field of communication, and for example, may include an LTE protocol, an NR protocol, and a related protocol appliable to a future communication system. This is not limited in the present disclosure.

The term "a plurality of" herein means two or more. The term "and/or" describes association relationship of associated objects, and it indicates three types of relationships. For example, the phrase "A and/or B" means (A), (B), or (A and B). The character "/" usually indicates an "or" relationship between the associated objects.

The term "greater than or equal to" herein may mean "greater than or equal to" or just "greater", and the term "less than or equal to" may mean less than or equal to or just "less than".

In addition, the serial numbers of the processes described herein only exemplifies one possible execution sequence among the processes. In some other embodiments, the above processes may also be executed without following the numbering sequence. For example, two processes with different serial numbers are executed simultaneously or in an order reverse to the order shown in the figures. This is not limited in the embodiments of the present disclosure.

Those skilled in the art should be aware that in the above one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above is merely exemplary embodiments of the present disclosure and is not intended to limit the present disclosure. Any modification, equivalent replacement, and improvement, and the like, made within

## Claims

1. A method for sidelink (SL) communication, applicable to a second terminal device, the method comprising:

   receiving first information from a first terminal device, wherein the first information is used for indicating a set of resources suitable for use by the second terminal device, and/or a set of resources unsuitable for use by the second terminal device; and
   selecting a transmission resource for an SL positioning reference signal (PRS) based on the first information.

2. The method according to claim 1, wherein prior to receiving the first information from the first terminal device, the method further comprises:

   in a case that a first condition is met, transmitting second information to the first terminal device, wherein the second information is used for requesting to acquire the first information;
   wherein the first condition comprises at least one of the following items:

   an SL PRS to be transmitted to the first terminal device is present;
   SL information other than an SL PRS to be transmitted to the first terminal device is present; or
   a trigger condition determined by the second terminal device based on self-implementation for transmitting the second information is met.

3. The method according to claim 2, wherein the SL PRS is transmitted within a shared resource pool, or the SL PRS is transmitted within a dedicated resource pool, wherein a resource within the dedicated resource pool is further used for transmitting an SL channel or signal other than the SL PRS; and

   the second information does not distinguish whether the requested first information is used for transmission of the SL PRS or used for transmission of the SL channel or signal other than the SL PRS; or
   the second information distinguishes whether the requested first information is used for transmission of the SL PRS or used for transmission of the SL channel or signal other than the SL PRS; or

   in a case that the second information is used for requesting the set of resources suitable for use by the second terminal device, the second information distinguishes whether the requested first information is used for transmission of the SL PRS or used for transmission of the SL channel or signal other than the SL PRS; or in a case that the second information is used for requesting the set of resources unsuitable for use by the second terminal device, the second information does not distinguish whether the requested first information is used for transmission of the SL PRS or used for transmission of the SL channel or signal other than the SL PRS; or

   in a case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

4. The method according to claim 3, wherein a message for carrying the second information comprises third information, wherein the third information is used for indicating whether the first information requested by the second information is used for transmission of the SL PRS or used for transmission of the SL channel or signal other than the SL PRS.

5. The method according to claim 2, wherein the SL PRS is transmitted within a dedicated resource pool, the dedicated resource pool comprising a first resource subset and a second resource subset, wherein the first resource subset is a resource subset for transmitting the SL PRS, and the second resource subset is a resource subset for transmitting an SL channel or signal other than the SL PRS; and

   the second information distinguishes whether the requested first information is used for transmission of the SL PRS or used for transmission of the SL channel or signal other than the SL PRS; or
   in a case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

6. The method according to claim 5, wherein a message for carrying the second information comprises fourth information used for indicating a resource selection window; and

    in a case that a resource belonging to the first resource subset is present within a start time unit of the resource selection window indicated by the fourth information, the first information requested by the second information is used for transmission of the SL PRS; or
    in a case that no resource belonging to the first resource subset is present within a start time unit of the resource selection window indicated by the fourth information, the first information requested by the second information is used for transmission of the SL channel or signal other than the SL PRS.

7. The method according to claim 6, wherein

    in a case that the first information requested by the second information is used for transmission of the SL PRS, the resource selection window is understood to comprise a resource belonging to the first resource subset within a time period from the start time unit to an end time unit; or
    in a case that the first information requested by the second information is used for transmission of the SL channel or signal other than the SL PRS, the resource selection window is understood to comprise a resource belonging to the second resource subset within a time period from the start time unit to an end time unit.

8. The method according to claim 2, wherein the SL PRS is transmitted within a dedicated resource pool, wherein the dedicated resource pool is not used for transmitting an SL channel or signal other than the SL PRS; and
    in a case that the first information requested by the second information is used for transmission of the SL PRS, the second information is transmitted within an SL communication resource pool associated with the dedicated resource pool.

9. The method according to claim 8, wherein the dedicated resource pool is associated with one SL communication resource pool, and one SL communication resource pool is associated with only one dedicated resource pool.

10. The method according to claim 8, wherein

    the dedicated resource pool is associated with one SL communication resource pool, and one SL communication resource pool is associated with a plurality of dedicated resource pools; and a message for carrying the second information comprises fifth information, wherein the fifth information is used for indicating an index of the dedicated resource pool.

11. The method according to any one of claims 2 to 10, wherein the message for carrying the second information is at least one of a medium access control (MAC) control element (CE) or sidelink control information (SCI).

12. The method according to any one of claims 1 to 11, wherein the first information is transmitted by the first terminal device in a case that a second condition is met, wherein the second condition comprises at least one of the following items:

    the second information is received from the first terminal device, wherein the second information is used for requesting to acquire the first information;
    other information to be transmitted together with the first information to the second terminal device is present; or
    a trigger condition determined by the first terminal device based on self-implementation for transmitting the first information is met.

13. The method according to any one of claims 1 to 12, wherein selecting the transmission resource for the SL PRS based on the first information comprises:

    selecting the transmission resource for the SL PRS from the set of resources suitable for use by the second terminal device; and/or
    selecting the transmission resource for the SL PRS from a remaining resource excluding the set of resources unsuitable for use by the second terminal device.

14. The method according to any one of claims 1 to 13, wherein a message for carrying the first information comprises sixth information, wherein the sixth information is used for indicating whether the first information is used for transmission of the SL PRS or used for transmission of the SL channel or signal other than the SL PRS.

15. The method according to any one of claims 1 to 14, wherein a message for carrying the first information is a medium access control (MAC) control element (CE).

16. A method for sidelink (SL) communication, applicable to a first terminal device, the method comprising:

transmitting first information to a second terminal device, wherein the first information is used for indicating a set of resources suitable for use by the second terminal device, and/or a set of resources unsuitable for use by the second terminal device.

17. The method according to claim 16, wherein prior to transmitting the first information to the second terminal device, the method further comprises:

receiving second information from the second terminal device, wherein the second information is used for requesting to acquire the first information;

wherein the second information is transmitted by the second terminal device in a case that a first condition is met, wherein the first condition comprises at least one of the following items:

an SL PRS to be transmitted to the first terminal device is present;

SL information other than an SL PRS to be transmitted to the first terminal device is present; or

a trigger condition determined by the second terminal device based on self-implementation for transmitting the second information is met.

18. The method according to claim 17, wherein the SL PRS is transmitted within a shared resource pool, or the SL PRS is transmitted within a dedicated resource pool, wherein a resource within the dedicated resource pool is further used for transmitting an SL channel or signal other than the SL PRS; and

the second information does not distinguish whether the requested first information is used for transmission of the SL PRS or used for transmission of the SL channel or signal other than the SL PRS; or

the second information distinguishes whether the requested first information is used for transmission of the SL PRS or used for transmission of the SL channel or signal other than the SL PRS; or

in a case that the second information is used for requesting the set of resources suitable for use by the second terminal device, the second information distinguishes whether the requested first information is used for transmission of the SL PRS or used for transmission of the SL channel or signal other than the SL PRS; or in a case that the second information is used for requesting the set of resources unsuitable for use by the second terminal device, the second information does not distinguish whether the requested first information is used for transmission of the SL PRS or used for transmission of the SL channel or signal other than the SL PRS; or

in a case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

19. The method according to claim 18, wherein a message for carrying the second information comprises third information, wherein the third information is used for indicating whether the first information requested by the second information is used for transmission of the SL PRS or used for transmission of the SL channel or signal other than the SL PRS.

20. The method according to claim 17 wherein the SL PRS is transmitted within a dedicated resource pool, the dedicated resource pool comprising a first resource subset and a second resource subset, wherein the first resource subset is a resource subset for transmitting the SL PRS, and the second resource subset is a resource subset for transmitting an SL channel or signal other than the SL PRS; and

the second information distinguishes whether the requested first information is used for transmission of the SL PRS or used for transmission of the SL channel or signal other than the SL PRS; or

in a case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

21. The method according to claim 20, wherein a message for carrying the second information comprises fourth information used for indicating a resource selection window; and

in a case that a resource belonging to the first resource subset is present within a start time unit of the resource selection window indicated by the fourth information, the first information requested by the second information is used for transmission of the SL PRS; or

in a case that no resource belonging to the first resource subset is present within a start time unit of the resource selection window indicated by the fourth information, the first information requested by the second information is used for transmission of the SL channel or signal other than the SL PRS.

22. The method according to claim 21, wherein

in a case that the first information requested by the second information is used for transmission of the SL PRS, the resource selection window is understood to comprise a resource belonging to the first resource subset within a time period from the start time unit to an end time unit; or

in a case that the first information requested by the second information is used for transmission of the SL channel or signal other than the SL PRS, the resource selection window is understood to comprise a resource belonging to the second resource subset within a time period from the start time unit to an end time unit.

23. The method according to claim 17, wherein the SL PRS is transmitted within a dedicated resource pool, wherein the dedicated resource pool is not used for transmitting an SL channel or signal other than the SL PRS; and

in a case that the first information requested by the second information is used for transmission of the SL PRS, the second information is transmitted within an SL communication resource pool associated with the dedicated resource pool.

24. The method according to claim 23, wherein the dedicated resource pool is associated with one SL communication resource pool, and one SL communication resource pool is associated with only one dedicated resource pool.

25. The method according to claim 23, wherein the dedicated resource pool is associated with one SL communication resource pool, and one SL communication resource pool is associated with a plurality of dedicated resource pools; and

a message for carrying the second information comprises fifth information, wherein the fifth information is used for indicating an index of the dedicated resource pool.

26. The method according to any one of claims 17 to 25, wherein the message for carrying the second information is at least one of a medium access control (MAC) control element (CE) or sidelink control information (SCI).

27. The method according to any one of claims 16 to 26, wherein the first information is transmitted by the first terminal device in a case that a second condition is met, wherein the second condition comprises at least one of the following items:

the second information is received from the first terminal device, wherein the second information is used for requesting to acquire the first information;

other information to be transmitted together with the first information to the second terminal device is present; and

a trigger condition determined by the first terminal device based on self-implementation for transmitting the first information is met.

28. The method according to any one of claims 16 to 27, wherein a message for carrying the first information comprises sixth information, wherein the sixth information is used for indicating whether the first information is used for transmission of the SL PRS or used for transmission of the SL channel or signal other than the SL PRS.

29. The method according to any one of claims 16 to 28, wherein a message for carrying the first information is a medium access control (MAC) control element (CE).

30. An apparatus for sidelink (SL) communication, comprising:

a receiving module, configured to receive first information from a first terminal device, wherein the first information is used for indicating a set of resources suitable for use by a second terminal device, and/or a set of resources unsuitable for use by the second terminal device; and

a processing module, configured to select a transmission resource for an SL PRS based on the first information.

31. The apparatus according to claim 30, further comprising:

a transmitting module, configured to: in a case that a first condition is met, transmit second information to the first terminal device, wherein the second information is used for requesting to acquire the first information;

wherein the first condition comprises at least one of the following items:

an SL PRS to be transmitted to the first terminal device is present;

SL information other than an SL PRS to be transmitted to the first terminal device is present; or

a trigger condition determined by the second terminal device based on self-implementation for transmitting the second information is met.

32. The apparatus according to claim 31, wherein the SL PRS is transmitted within a shared resource pool, or the SL PRS is transmitted within a dedicated resource pool, wherein a resource within the dedicated resource pool is further used for transmitting an SL channel or signal other than the SL PRS; and

the second information does not distinguish whether the requested first information is used for transmission of the SL PRS or used for transmission of the SL channel or signal other than the SL PRS; or

the second information distinguishes whether the requested first information is used for transmission of the SL PRS or used for transmission of the SL channel or signal other than the SL PRS; or

in a case that the second information is used for requesting the set of resources suitable for use by the second terminal device, the second information distinguishes whether the requested first information is used for transmission of the SL PRS or used for transmission of the SL channel or signal other than the SL PRS; or in a case that the second information is used for requesting the set of resources unsuitable for use by the second terminal device, the second information does not distinguish whether the requested first information is used for transmission of the SL PRS or used for transmission of the SL channel or signal other than the SL PRS; or

in a case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

33. The apparatus according to claim 32, wherein a message for carrying the second information comprises third information, wherein the third information is used for indicating whether the first information requested by the second information is used for transmission of the SL PRS or used for transmission of the SL channel or signal other than the SL PRS.

34. The apparatus according to claim 31, wherein the SL PRS is transmitted within a dedicated resource pool, the dedicated resource pool comprising a first resource subset and a second resource subset, wherein the first resource subset is a resource subset for transmitting the SL PRS, and the second resource subset is a resource subset for transmitting an SL channel or signal other than the SL PRS; and

the second information distinguishes whether the requested first information is used for transmission of the SL PRS or used for transmission of the SL channel or signal other than the SL PRS; or

in a case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

35. The apparatus according to claim 34, wherein a message for carrying the second information comprises fourth information used for indicating a resource selection window; and

in a case that a resource belonging to the first resource subset is present within a start time unit of the resource selection window indicated by the fourth information, the first information requested by the second information is used for transmission of the SL PRS; or

in a case that no resource belonging to the first resource subset is present within a start time unit of the resource selection window indicated by the fourth information, the first information requested by the second information is used for transmission of the SL channel or signal other than the SL PRS.

36. The apparatus according to claim 35, wherein

in a case that the first information requested by the second information is used for transmission of the SL PRS, the resource selection window is understood to comprise a resource belonging to the first resource subset within a time period from the start time unit to an end time unit; or

in a case that the first information requested by the second information is used for transmission of the SL channel or signal other than the SL PRS, the resource selection window is understood to comprise a resource belonging to the second resource subset within a time period from the start time unit to an end time unit.

37. The apparatus according to claim 31, wherein the SL PRS is transmitted within a dedicated resource pool, wherein the dedicated resource pool is not used for transmitting an SL channel or signal other than the SL PRS; and
in a case that the first information requested by the second information is used for transmission of the SL PRS, the second information is transmitted within an SL communication resource pool associated with the dedicated resource pool.

38. The apparatus according to claim 37, wherein the dedicated resource pool is associated with one SL communication resource pool, and one SL communication resource pool is associated with only one dedicated resource pool.

39. The apparatus according to claim 37, wherein the dedicated resource pool is associated with one SL communication resource pool, and one SL communication resource pool is associated with a plurality of dedicated resource pools; and
a message for carrying the second information comprises fifth information, wherein the fifth information is used for indicating an index of the dedicated resource pool.

40. The apparatus according to any one of claims 31 to 39, wherein the message for carrying the second information is at least one of a medium access control (MAC) control element (CE) or SCI.

41. The apparatus according to any one of claims 30 to 40, wherein the first information is transmitted by the first terminal device in a case that a second condition is met, wherein the second condition comprises at least one of the following items:

   the second information is received from the first terminal device, wherein the second information is used for requesting to acquire the first information;
   other information to be transmitted together with the first information to the second terminal device is present; or
   a trigger condition determined by the first terminal device based on self-implementation for transmitting the first information is met.

42. The apparatus according to any one of claims 30 to 41, wherein selecting the transmission resource for the SL PRS based on the first information comprises:

selecting the transmission resource for the SL PRS from the set of resources suitable for use by the second terminal device; and/or
selecting the transmission resource for the SL PRS from a remaining resource excluding the set of resources unsuitable for use by the second terminal device.

43. The apparatus according to any one of claims 30 to 42, wherein a message for carrying the first information comprises sixth information, wherein the sixth information is used for indicating whether the first information is used for transmission of the SL PRS or used for transmission of the SL channel or signal other than the SL PRS.

44. The apparatus according to any one of claims 30 to 43, wherein a message for carrying the first information is a medium access control (MAC) control element (CE).

45. An apparatus for SL communication, comprising:
a transmitting module, configured to transmit first information to a second terminal device, wherein the first information is used for indicating a set of resources suitable for use by the second terminal device, and/or a set of resources unsuitable for use by the second terminal device.

46. The apparatus according to claim 45, further comprising:

   a receiving module, configured to receive second information from the second terminal device, wherein the second information is used for requesting to acquire the first information;
   wherein the second information is transmitted by the second terminal device in a case that a first condition is met, wherein the first condition comprises at least one of the following items:

      an SL PRS to be transmitted to the first terminal device is present;
      SL information other than an SL PRS to be transmitted to the first terminal device is present; or
      a trigger condition determined by the second terminal device based on self-implementation for transmitting the second information is met.

47. The apparatus according to claim 46, wherein the SL PRS is transmitted within a shared resource pool, or the SL PRS is transmitted within a dedicated resource pool, wherein a resource within the dedicated resource pool is further used for transmitting an SL channel or signal other than the SL PRS; and

the second information does not distinguish whether the requested first information is used for transmission of the SL PRS or used for transmission of the SL channel or signal other than the SL PRS; or

the second information distinguishes whether the requested first information is used for transmission of the SL PRS or used for transmission of the SL channel or signal other than the SL PRS; or

in a case that the second information is used for requesting the set of resources suitable for use by the second terminal device, the second information distinguishes whether the requested first information is used for transmission of the SL PRS or used for transmission of the SL channel or signal other than the SL PRS; or in a case that the second information is used for requesting the set of resources unsuitable for use by the second terminal device, the second information does not distinguish whether the requested first information is used for transmission of the SL PRS or used for transmission of the SL channel or signal other than the SL PRS; or

in a case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

48. The apparatus according to claim 47, wherein a message for carrying the second information comprises third information, wherein the third information is used for indicating whether the first information requested by the second information is used for transmission of the SL PRS or used for transmission of the SL channel or signal other than the SL PRS.

49. The apparatus according to claim 46, wherein the SL PRS is transmitted within a dedicated resource pool, the dedicated resource pool comprising a first resource subset and a second resource subset, wherein the first resource subset is a resource subset for transmitting the SL PRS, and the second resource subset is a resource subset for transmitting an SL channel or signal other than the SL PRS; and

the second information distinguishes whether the requested first information is used for transmission of the SL PRS or used for transmission of the SL channel or signal other than the SL PRS; or

in a case that the second terminal device requests the set of resources suitable or unsuitable for use by the second terminal device within the dedicated resource pool, the second information does not distinguish whether the requested first information is used for transmission of the SL PRS or used for transmission of the SL channel or signal other than the SL PRS, wherein the second information is understood as that the requested first information is used for transmission of the SL PRS.

50. The apparatus according to claim 49, wherein a message for carrying the second information comprises fourth information used for indicating a resource selection window; and

in a case that a resource belonging to the first resource subset is present within a start time unit of the resource selection window indicated by the fourth information, the first information requested by the second information is used for transmission of the SL PRS; or

in a case that no resource belonging to the first resource subset is present within a start time unit of the resource selection window indicated by the fourth information, the first information requested by the second information is used for transmission of the SL channel or signal other than the SL PRS.

51. The apparatus according to claim 50, wherein

in a case that the first information requested by the second information is used for transmission of the SL PRS, the resource selection window is understood to comprise a resource belonging to the first resource subset within a time period from the start time unit to an end time unit; or

in a case that the first information requested by the second information is used for transmission of the SL channel or signal other than the SL PRS, the resource selection window is understood to comprise a resource belonging to the second resource subset within a time period from the start time unit to an end time unit.

52. The apparatus according to claim 46, wherein the SL PRS is transmitted within a dedicated resource pool, wherein the dedicated resource pool is not used for transmitting an SL channel or signal other than the SL PRS; and

in a case that the first information requested by the second information is used for transmission of the SL PRS, the second information is transmitted within an SL communication resource pool associated with the dedicated resource pool.

**53.** The apparatus according to claim 52, wherein the dedicated resource pool is associated with one SL communication resource pool, and one SL communication resource pool is associated with only one dedicated resource pool.

**54.** The apparatus according to claim 52, wherein the dedicated resource pool is associated with one SL communication resource pool, and one SL communication resource pool is associated with a plurality of dedicated resource pools; and
a message for carrying the second information comprises fifth information, wherein the fifth information is used for indicating an index of the dedicated resource pool.

**55.** The apparatus according to any one of claims 46 to 54, wherein the message for carrying the second information is at least one of a medium access control (MAC) control element (CE) or sidelink control information (SCI).

**56.** The apparatus according to any one of claims 45 to 55, wherein the first information is transmitted by the first terminal device in a case that a second condition is met, wherein the second condition comprises at least one of the following items:

> the second information is received from the first terminal device, wherein the second information is used for requesting to acquire the first information;
> there is other information to be transmitted together with the first information to the second terminal device is present; and
> a trigger condition determined by the first terminal device based on self-implementation for transmitting the first information is met.

**57.** The apparatus according to any one of claims 45 to 56, wherein a message for carrying the first information comprises sixth information, wherein the sixth information is used for indicating whether the first information is used for transmission of the SL PRS or used for transmission of the SL channel or signal other than the SL PRS.

**58.** The apparatus according to any one of claims 45 to 57, wherein a message for carrying the first information is a medium access control (MAC) control element (CE).

**59.** A terminal device, comprising: a processor and a memory, wherein the memory is configured to store one or more computer programs, wherein the processor is configured to load and run the one or more computer programs, to cause the terminal device to perform the method as defined in any one of claims 1 to 15, or perform the method as defined in any one of claims 16 to 29.

**60.** A computer-readable storage medium, storing one or more computer programs, wherein the one or more computer programs, when loaded and run by a processor, cause the processor to perform the method as defined in any one of claims 1 to 15, or perform the method as defined in any one of claims 16 to 29.

**61.** A chip, comprising: a programmable logic circuit and/or one or more program instructions, wherein the chip, when running, is caused to perform the method as defined in any one of claims 1 to 15, or perform the method as defined in any one of claims 16 to 29.

**62.** A computer program product, comprising one or more computer programs stored in a computer-readable storage medium, wherein the one or more computer programs, when read from the computer-readable storage medium and run by a processor, cause the processor to perform the method as defined in any one of claims 1 to 15, or perform the method as defined in any one of claims 16 to 29.

11

Core network

12

14    14

Access network

13

13

13

FIG. 1

Base station 1

UE1 ←SL communication→ UE2

FIG. 2

Base station 1    ←SL communication→

UE1    UE2

FIG. 3

Base station 1

SL communication

UE1          UE2

FIG. 4

$n-T_{proc,0}$

Excluded resource

E(v,m)

$n-T_0$          $a$          $n$    $n+T_1$          $n+T_2$    $t$

non-monitored slot

Sensing window          Selection window

FIG. 5

B          A          C

FIG. 6

B  C

A          D

FIG. 7

| Second terminal device | | First terminal device |
|---|---|---|

810 In the case that a first condition is met, the second terminal device transmits second information to the first terminal device, wherein the second information is used for requesting to acquire the first information

820 The first terminal device transmits first information to a second terminal device, wherein the first information is used for indicating a set of resources suitable for use by the second terminal device, and/or a set of resources unsuitable for use by the second terminal device

830 The second terminal device selects a transmission resource for an SL PRS based on the first information

FIG. 8

910

920

Frequency domain

Time domain

☐ SL PRS

■ SL channel or signal other than the SL PRS

FIG. 9

1010

1011

1012

Frequency domain

Time domain

☐ SL PRS

■ SL channel or signal other than the SL PRS

FIG. 10

Subset 1         1110      Subset 2

Slot       Slot         Slot
a          c           b

FIG. 11

1210

Frequency
domain

SL PRS

Time
domain

FIG. 12

Frequency
domain

Time
domain

SL PRS

SL channel or signal
other than the SL PRS

FIG. 13

1400

1410

Receiving module

1420

Processing module

FIG. 14

1400

1430

Transmitting module

1410

Receiving module

1420

Processing module

FIG. 15

1600

1610

Transmitting module

FIG. 16

1600

1620

Receiving module

1610

Transmitting module

FIG. 17

Terminal device 1800

Processor 1801

Transceiver 1802

Wireless communication chip

RF antenna

Wireless communication component

Memory 1803

FIG. 18

## INTERNATIONAL SEARCH REPORT

International application No.

**PCT/CN2022/123231**

### A. CLASSIFICATION OF SUBJECT MATTER

H04W72/04(2023.01)i;H04W76/14(2018.01)i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

3GPP, CNABS, CNTXT, CNKI, ENTXTC, WPABSC: 不合适, 不适合, 定位参考信号, 排除, 指示, 资源, 集合, 侧行, suitable, positioning reference signal, prs, exclusion, indication, resource, set, sidelink, SL

### C. DOCUMENTS CONSIDERED TO BE RELEVANT

| Category* | Citation of document, with indication, where appropriate, of the relevant passages | Relevant to claim No. |
|---|---|---|
| X | WO 2022040939 A1 (GUANGDONG OPPO MOBILE TELECOMMUNICATIONS CORP., LTD.) 03 March 2022 (2022-03-03) description, pages 5-16 | 1-62 |
| X | FUJITSU. "Considerations on inter-UE coordination for mode 2 enhancements" *3GPP TSG RAN WG1 #102-e R1-2005546*, 28 August 2020 (2020-08-28), sections 2-5 | 1-62 |
| X | SPREADTRUM COMMUNICATIONS. "Discussion on feasibility and benefit of mode 2 enhancements" *3GPP TSG RAN WG1 #102-e R1- 2006268*, 28 August 2020 (2020-08-28), sections 2-3 | 1-62 |
| X | TCL COMMUNICATION. "Feasibility and benefits for Mode 2 enhancements" *3GPP TSG RAN WG1 #102-e R1- 2005774*, 28 August 2020 (2020-08-28), sections 1-5 | 1-62 |
| X | WO 2022141465 A1 (HUAWEI TECHNOLOGIES CO., LTD.) 07 July 2022 (2022-07-07) pages 1-3 | 1-62 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 April 2023** | **21 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/123231** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2021314965 A1 (COMCAST CABLE COMMUNICATIONS, LLC) 07 October 2021 (2021-10-07)<br>entire document | 1-62 |

Form PCT/ISA/210 (second sheet) (July 2022)

## INTERNATIONAL SEARCH REPORT
### Information on patent family members

International application No.

**PCT/CN2022/123231**

| Patent document cited in search report | | | Publication date (day/month/year) | Patent family member(s) | | | Publication date (day/month/year) |
|---|---|---|---|---|---|---|---|
| WO | 2022040939 | A1 | 03 March 2022 | CN | 115699930 | A | 03 February 2023 |
| WO | 2022141465 | A1 | 07 July 2022 | None | | | |
| US | 2021314965 | A1 | 07 October 2021 | US | 2021314966 | A1 | 07 October 2021 |
| | | | | US | 2023080200 | A1 | 16 March 2023 |
| | | | | CA | 3114073 | A1 | 03 October 2021 |
| | | | | EP | 3890417 | A1 | 06 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- NR positioning enhancement. *3GPP R-17, 3GPP RAN*